# EUROPÄISCHE PATENTANMELDUNG

(11) **EP 0 954 957 A1**
(43) Veröffentlichungstag der Anmeldung: **10.11.1999**
(21) Anmeldenummer: 99107957.5
(22) Anmeldetag: 22.04.1999
(51) Int. Cl.: A01D 85/00, A01F 15/07

(54) **Landwirtschaftliche Aufsammel-, Transport- und Absetzeinheit**

(30) Priorität: 02.05.1998 DE 19819600
(71) Anmelder: Maschinenfabriken Bernard Krone GmbH, D-48480 Spelle (DE)
(72) Erfinder: Krone, Bernard E.h Dr.-Ing., 48480 Spelle (DE); Kreienbaum, Hubert, 48703 Stadtlohn (DE)

(57) **Zusammenfassung**

Landwirtschaftliche Aufsammel-, Transport- und Absetzeinheit für Erntegutballen mit einem sich über Laufräder gegenüber dem Erdboden abstützenden Rahmen (1), einer an einem, bezüglich der Fahrt- und Arbeitsrichtung (F) vorderen Ende des Rahmens (1) angeordneten Aufnehmereinrichtung (2), sowie einer dahinter befindlichen, um eine quer zur Fahrt- und Arbeitsrichtung (F) gerichtete Achse (25.1) schwenkbaren Plattform (4) zur Bildung von einer Ballengruppe (5) und zur Ablage der Ballengruppe (5) auf einer der Plattform (4) nachgeordneten Ladepritsche (7), welche ein in und entgegen der Fahrt- und Arbeitsrichtung (F) bewegbar geführtes, als Anlage für die hinterste Ballengruppe (5) dienendes Verschiebegestell (28) aufweist und zum Absetzen eines aus mehreren Ballengruppen (5) bestehenden Ballenstapels um eine quer zur Fahrt- und Arbeitsrichtung (F) gerichtete Achse (7.1) aus einer zumindest in etwa horizontalen in eine vertikale Stellung und zurück überführbar ist, wobei der Aufnehmereinrichtung (2) eine Umhüllungsvorrichtung (3) zum allseitigen und luftdichten Umhüllen der Erntegutballen (8) zu- oder nachgeordnet ist.

## Beschreibung

Die Erfindung betrifft eine landwirtschaftliche Aufsammel-, Transport- und Absetzeinheit für Erntegutballen, insbesondere für quaderförmige Erntegutballen nach dem Oberbegriff des Anspruches 1. Derartige Aufsammel-, Transport- und Absetzeinheiten sind aus der Praxis in vielfältigen Ausführungen bekannt.

In der DE 19 40 785 B2 ist ein Ballentransportwagen offenbart, mit dem mittels eines Ballenaufnehmers Erntegutballen aus landwirtschaftlichem Erntegut von der Feld- oder Wiesenfläche aufgenommen, einer Plattform zur Bildung von Ballengruppen zugeführt und danach zwecks Bildung eines aus mehreren Ballengruppen bestehenden Ballenstapels auf einer Ladepritsche abgesetzt werden können. Der vorstehend beschriebene Ballentransportwagen ist mit dem Mangel behaftet, daß ein so gebildeter und an einer zentralen Ablagestelle abgesetzter Ballenstapel keinen wirksamen Schutz gegen Umwelteinflüsse aufweist. Desweiteren kann in einem in der vorstehend beschriebenen Art und Weise aus Erntegutballen geformten Ballenstapel kein hochwertiges Silagefutter hergestellt werden, da ein korrekt ablaufender Gärprozeß nicht möglich ist.

Aufgabe der Erfindung ist daher, eine landwirtschaftliche Aufsammel-, Transport- und Absetzeinheit zu schaffen, mit der in einem Arbeitsgang von der Feld- oder Wiesenfläche aufgenommene Erntegutballen luft- und flüssigkeitsdicht verpackt, zu einem Ballenstapel geformt und an einer zentralen Ablagestelle abgesetzt werden können.

Zur Lösung der gestellten Aufgabe zeichnet sich die landwirtschaftliche Aufsammel-, Transport- und Absetzeinheit der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 19 verwiesen.

Durch die Erfindung wird eine Lösung offenbart, wie in einer einfachen Art und Weise von nur einer Arbeitskraft und mit nur einer landwirtschaftlichen Zug- und Antriebsmaschine (Bei allen bisher bekannten Lösungen sind sowohl mehrere Arbeitskräfte als auch mehrere landwirtschaftliche Zug- und Antriebsmaschinen erforderlich) auf einer Feld- oder Wiesenfläche liegende Erntegutballen, insbesondere quaderförmige Erntegutballen aufgenommen, mit einer Folie Luft- und flüssigkeitsdicht verpackt, zu einem mehrere Erntegutballen umfaßenden Ballenstapel geformt und dann an einer zentralen Stelle abgesetzt werden können. Dazu ist es erfindungsgemäß vorgesehen, einer landwirtschaftlichen Aufsammel-, Transport- und Absetzeinheit, die eine Aufnehmereinrichtung zur Aufnahme von Erntegutballen von der Feld- oder Wiesenfläche und eine schwenkbare Plattform zur Bildung von Ballengruppen und zum anschließenden Aufsetzen der Ballengruppen auf eine Ladepritsche umfaßt, eine Umhüllungsvorrichtung zu zuordnen, mit der die aufgenommenen Erntegutballen Luft- und flüssigkeitsdicht verpackt werden können. Eine vorteilhafte Ausführungsform der Erfindung geht davon aus, daß die Erntegutballen bei der Umhüllung durch die Umhüllungsvorrichtung hindurch geführt werden, wobei die Erntegutballen dabei vorzugsweise so ausgerichtet sind, daß ihre größte Ausdehnung sich in Fahrt- und Arbeitsrichtung erstreckt.

Gemäß der Erfindung wird die Luft- und flüssigkeitsdichte Umhüllung der Erntegutballen dadurch erzielt, daß beim Durchlauf der Erntegutballen durch die Umhüllungsvorrichtung die Erntegutballen mit einer fortlaufenden, spiralförmigen Umhüllung umgeben werden. Dabei werden die Erntegutballen der Umhüllungsvorrichtung so zugeführt, daß zwischen den jeweiligen Erntegutballen ein Freiraum frei bleibt, der dazu dient, mittels einer geeigneten Schweiß- und Trennvorrichtung die Umhüllung an den jeweiligen Ballenenden luft- und flüssigkeitsdicht zu verschließen und dabei auch die Umhüllung zu durchtrennen. Nach der Erfindung ist es aber auch vorstellbar, die Erntegutballen der Umhüllungsvorrichtung unmittelbar aneinander anliegend zuzuführen, so daß beispielsweise zwei Erntegutballen mit einer kürzeren Ballenlänge zu Herstellung kleinerer Futterrationen in einer Umhüllung eingepackt werden können.

Um aus den aus der Umhüllungsvorrichtung austretenden, mit Folie umhüllten Erntegutballen eine aus zumindest zwei, quer zur Fahrt- und Arbeitsrichtung nebeneinander abgelegten Erntegutballen bestehende Ballengruppe zu bilden, kann es nach der Erfindung vorgesehen sein, die Umhüllungsvorrichtung quer zur Fahrt- und Arbeitsrichtung verschiebbar an einem Rahmen der landwirtschaftlichen Aufsammel-, Transport- und Absetzeinheit anzubringen. Ebenso ist es aber auch denkbar, die der Umhüllungsvorrichtung nachgeordnete Plattform zur Bildung einer Ballengruppe mit quer zur Fahrt- und Arbeitsrichtung ausgerichteten, drehbar gelagerten Rollen zu versehen, zwischen denen weitere Stützrollen zur Einleitung einer Querverschiebung der Erntegutballen angeordnet sind, wobei bei jeder Querverschiebung die Stützrollen so weit angehoben werden, daß die Rollen zur Längsverschiebung dabei entlastet sind. Zur Durchführung einer Längs- bzw. Querverschiebung der Erntegutballen auf der Plattform ist zumindest ein Teil der Rollen und ein Teil der Stützrollen antreibbar ausgebildet.

Nach der Erfindung kann die Umhüllungsvorrichtung neben weiteren Modifikationen und Ausführungsformen so ausgeführt sein, daß diese zumindest eine Vorstreckeinrichtung, vorzugsweise jedoch zwei Vorstreckeinrichtungen mit jeweils einer Vorratsrolle umfaßt, von der während einer Rotationsbewegung der Vorstreckeinrichtungen um eine in Fahrt- und Arbeitsrichtung gerichtete Achse ein Folienstreifen abgezogen und vorgestreckt wird. Die Folienstreifen können dabei aus einer Folie bestehen, welche dehnbar und selbsthaftend ist, so daß die sich überlappenden Abschnitte der Umhüllung selbsttätig aneinander haften. Dadurch ergibt sich auf der Oberfläche der sich entgegen der Fahrt- und Arbeitsrichtung bewegenden Erntegutballen eine fortlaufende, spiralförmige Umhüllung, die dann an den jeweiligen Ballenenden nur noch zuverschweißen ist und getrennt werden muß. Nach einem weiteren vorteilhaften Aspekt der Erfindung ist es aber auch denkbar, die fortlaufende, spiralförmige Umhüllung der Erntegutballen zwischen zwei aufeinander folgenden Erntegutballen zu durchtrennen, ohne daß dabei die Umhüllung an den jeweiligen Ballenenden miteinander verschweißt wird. Diese Art der Verpackung wird insbesondere bei Erntegutballen aus Stroh bevorzugt, das nicht siliert werden soll.

Zur Steuerung des Aufnahme-, Zuführ- und Umhüllungsvorganges der Erntegutballen sind nach einem weiteren Aspekt der Erfindung Erkennungsmittel vorgesehen, welche beispielsweise als Tastelemente oder Meßräder ausgeführt sein können. Die von den Erkennungsmitteln bereitgestellten Signale sind dabei einer zentralen Auswerte- und Steuerungseinheit zuführbar, so daß dadurch eine einfache Bedienung bzw. Handhabung der landwirtschaftlichen Aufsammel-, Transport- und Absetzeinheit ermöglicht wird.

Eine detaillierte Beschreibung des Gegenstandes der Erfindung erfolgt nun anhand eines Ausführungsbeispieles. In der Zeichnung stellt im einzelnen dar:
- Fig.1: eine Ausführung einer erfindungsgemäßen Aufsammel-, Transport- und Absetzeinheit bei der Aufnahme eines Erntegutballens;
- Fig.2: eine Ausführung der erfindungsgemäßen Aufsammel-, Transport- und Absetzeinheit zu Beginn eines Umhüllungsvorganges;
- Fig.3: eine Ausführung der erfindungsgemäßen Aufsammel-, Transport- und Absetzeinheit bei der Bildung einer Ballengruppe;
- Fig.4: eine Ausführung der erfindungsgemäßen Aufsammel-, Transport- und Absetzeinheit beim Absetzen der Ballengruppe auf der Ladepritsche;
- Fig.5: eine Ausführung der erfindungsgemäßen Aufsammel-, Transport- Absetzeinheit beim Absetzen des Ballenstapels von der Ladepritsche;
- Fig.6: eine Schnittdarstellung gemäß Schnitt VI - VI in Fig.1;

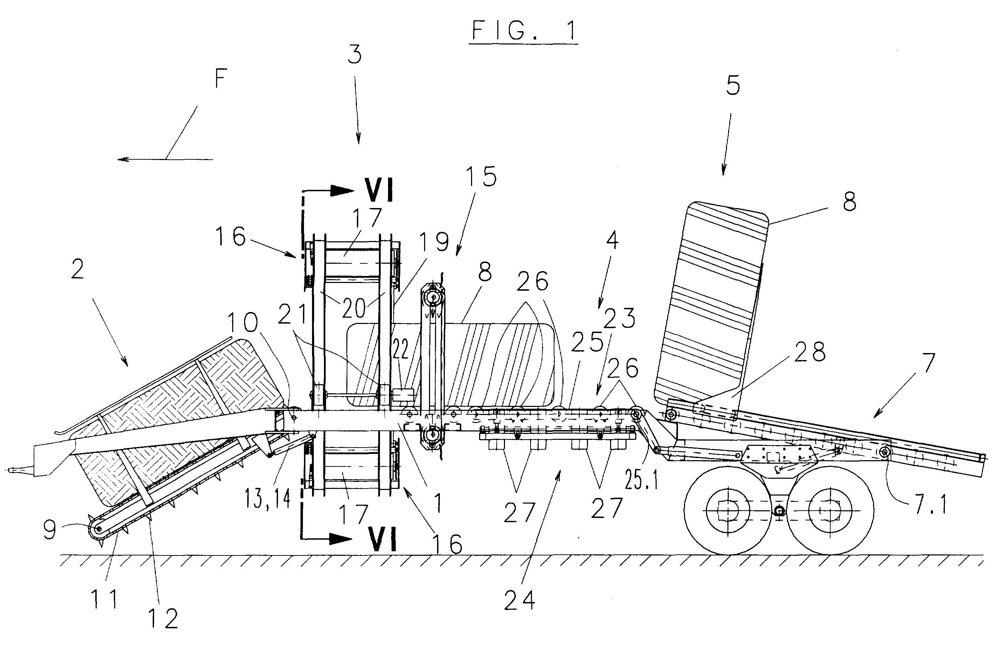

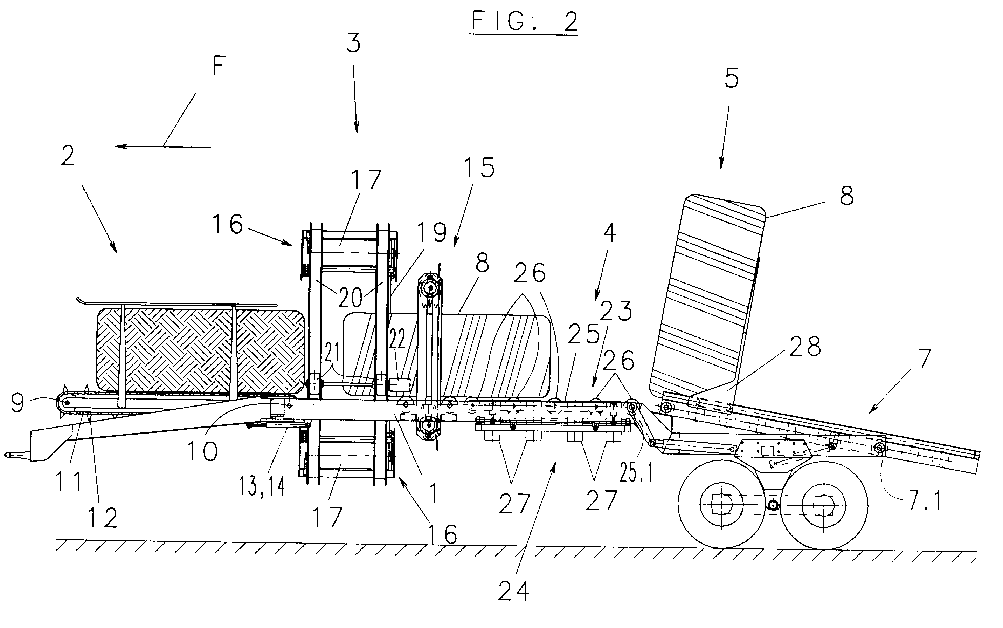

Eine Ausführungsform einer landwirtschaftlichen Aufsammel-, Transport- und Absetzeinheit nach der Erfindung ist in den Figuren 1 bis 5 näher veranschaulicht und besteht im wesentlichen aus einem sich über Laufräder gegenüber dem Erdboden abstützenden Rahmens 1, an dem eine Aufnehmereinrichtung 2, einer dieser nachgeordneten Umhüllungsvorrichtung 3 und einer hinter der Umhüllungsvorrichtung 3 befindlichen Plattform 4 zur Bildung einer Ballengruppe 5 und zur Formung eines mehrere Ballengruppen 5 umfassenden Ballenstapels 6 auf einer Ladepritsche 7 angebracht ist. Die Aufnehmereinrichtung 2 dient dabei der Aufnahme und der Zuführung von auf der Feld- oder Wiesenfläche abgelegten Erntegutballen 8 zu der Umhüllungsvorrichtung 3 . Dazu ist die Aufnehmereinrichtung 2 um eine quer zur Fahrt- und Arbeitsrichtung F ausgerichtete Achse schwenkbar am Rahmen 1 angebracht und kann aus einer schräg zum Erdboden geneigten Stellung während der Aufnahme der Erntegutballen 8 in eine in etwa horizontal ausgerichtete Stellung (Fig.2) zur Weiterleitung der Erntegutballen 8 an die Umhüllungsvorrichtung 3 und zurück überführt werden. Eine einfache konstruktive Ausbildung geht davon aus, daß die Aufnehmereinrichtung 2 eine um zwei Umlenkachsen umlaufende Kette 11 umfaßt, welche mit Mitnehmern 12 besetzt ist. Zur Überführung der Aufnehmereinrichtung 2 aus der schräg zum Erdboden geneigten Stellung in die in etwa horizontale Stellung und zurück sind vorzugsweise hydraulische Kolben-Zylinder-Anordnungen 13,14 oder dgl. eine Zug- oder Druckkraft erzeugende Stellglieder vorgesehen. Zum Betrieb der landwirtschaftlichen Aufsammel-, Transport- und Absetzeinheit kann diese an eine nicht dargestellte landwirtschaftliche Zug- und Antriebsmaschine angehängt und mit der zum Betrieb erforderlichen Antriebsenergie versorgt werden. Im Rahmen der Erfindung ist es aber ebenso denkbar, die landwirtschaftliche Aufsammel-, Transport- und Absetzeinheit als eine selbstfahrende Arbeitsmaschine auszubilden.

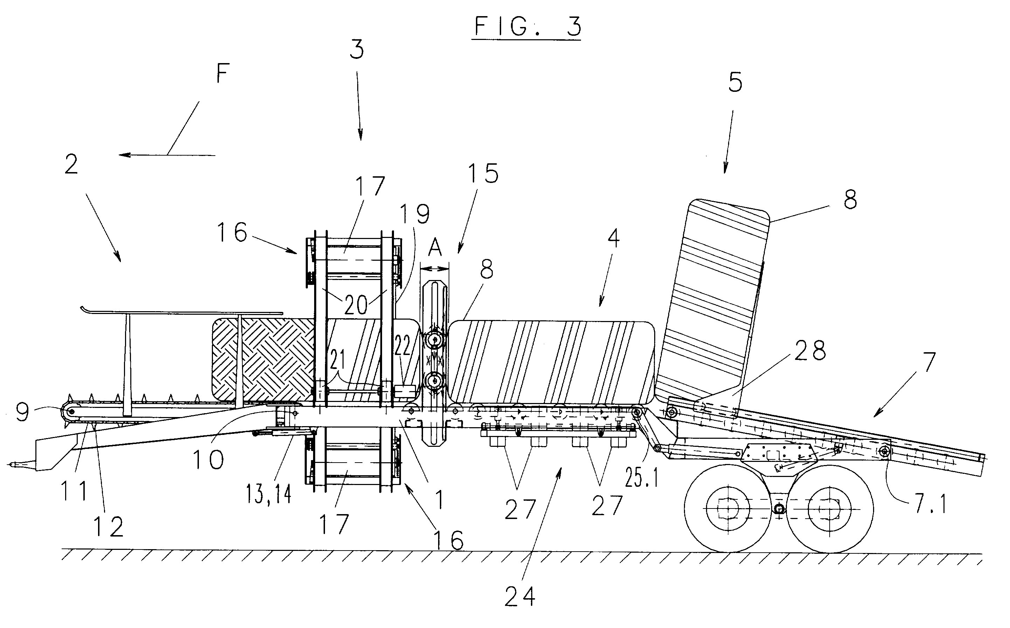

Wie insbesondere aus den Figuren 1 bis 3 weiterhin hervorgeht, werden die von der Aufnehmereinrichtung 2 aufgenommenen Erntegutballen 8 zur Erzeugung einer luft- und flüssigkeitsdichten Verpackung der Umhüllungsvorrichtung 3 zugeführt, bzw. durch die Umhüllungsvorrichtung 3 hindurch geführt. Dabei ist es nach der Erfindung vorgesehen, daß die Erntegutballen 8 beim Durchlauf der Umhüllungsvorrichtung 3 so ausgerichtet sind, daß sich ihre größte Ausdehnung in Fahrt- und Arbeitsrichtung F erstreckt und die jeweiligen Erntegutballen 8 einen Abstand A voneinander aufweisen. Beim Durchlauf der Erntegutballen 8 durch die Umhüllungsvorrichtung 3 wird der Freiraum zwischen zwei im Abstand A aufeinander folgenden Erntegutballen 8 ebenfalls mit der fortlaufenden, spiralförmigen Umhüllung umgeben, so daß mittels einer geeigneten, aus dem Stand der Technik bekannten Schweiß- und Trennvorrichtung 15 die fortlaufende, spiralförmige Umhüllung an zwei quer zur Fahrt- und Arbeitsrichtung F verlaufenden Schweißstellen miteinander verschweißt und zwischen diesen Schweißstellen durchgetrennt werden kann. Die Größe des Abstandes A zwischen zwei Erntegutballen 8 ist dabei so ausgelegt, daß ein luft- und flüssigkeitsdichtes Verschließen der Umhüllung auch an den jeweiligen Ballenenden erreichbar ist (Fig.3).

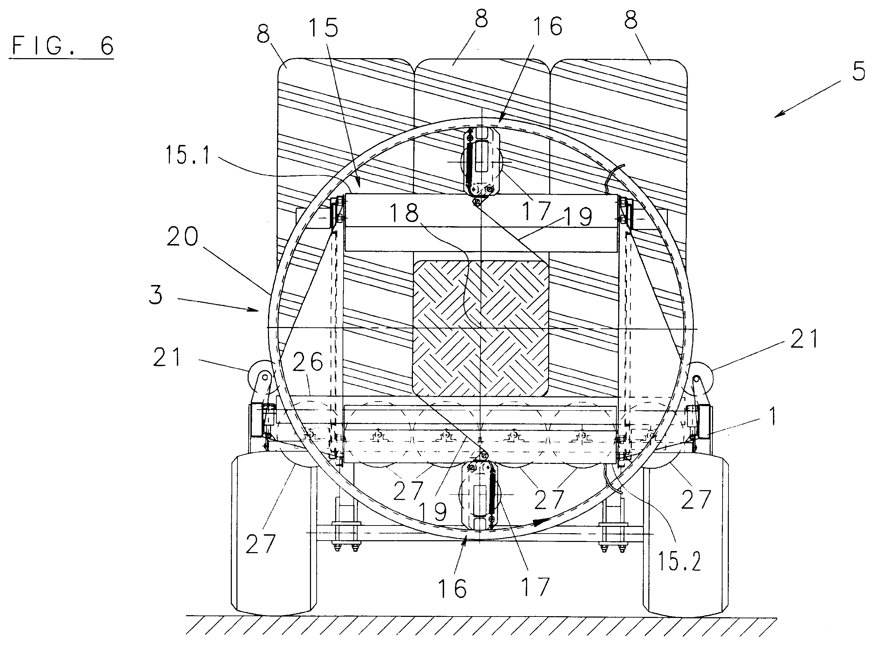

Wie den Figuren 1 bis 5 und insbesondere der Fig.6 zu entnehmen ist, umfaßt die Umhüllungsvorrichtung 3 zwei Vorstreckeinrichtungen 16 mit jeweils einer Vorratsrolle 17, von der während einer Rotationsbewegung der Vorstreckeinrichtungen 16 um eine in Fahrt- und Arbeitsrichtung F gerichtete Achse 18 ein Folienstreifen 19 abgezogen und dabei auf der Oberfläche der Erntegutballen 8 aufgebracht wird. Die Folienstreifen 19 können dabei aus einer dehnbaren, selbsthaftenden Folie bestehen. Dazu sind die Vorstreckeinrichtungen 16 an einem Drehkranz 20 gehaltert, der beispielsweise über Tragrollen 21 am Rahmen 1 der landwirtschaftlichen Aufsammel-, Transport- und Absetzeinheit abgestützt wird und vorzugsweise von einem hydraulischen Antriebsmotor 22 oder dgl. Antriebseinheiten antreibbar ist.

Wie weiterhin aus der Fig.6 hervorgeht, umfaßt die Schweiß- und Trennvorrichtung 15 ein oberes Schweiß- und Trennelement 15.1 und ein unteres Schweiß- und Trennelement 15.2, die bei einem Schweiß- und Trennvorgang der Umhüllung aufeinander zu bewegt werden. Dadurch wird der an der Ober- und an der Unterseite des Erntegutballens 8 befindliche Abschnitt der Umhüllung soweit zusammengeführt, bis beide Abschnitte aufeinander liegen und dann miteinander verschweißt werden können. Nach dem Schweißvorgang kann dann der Trennvorgang erfolgen.

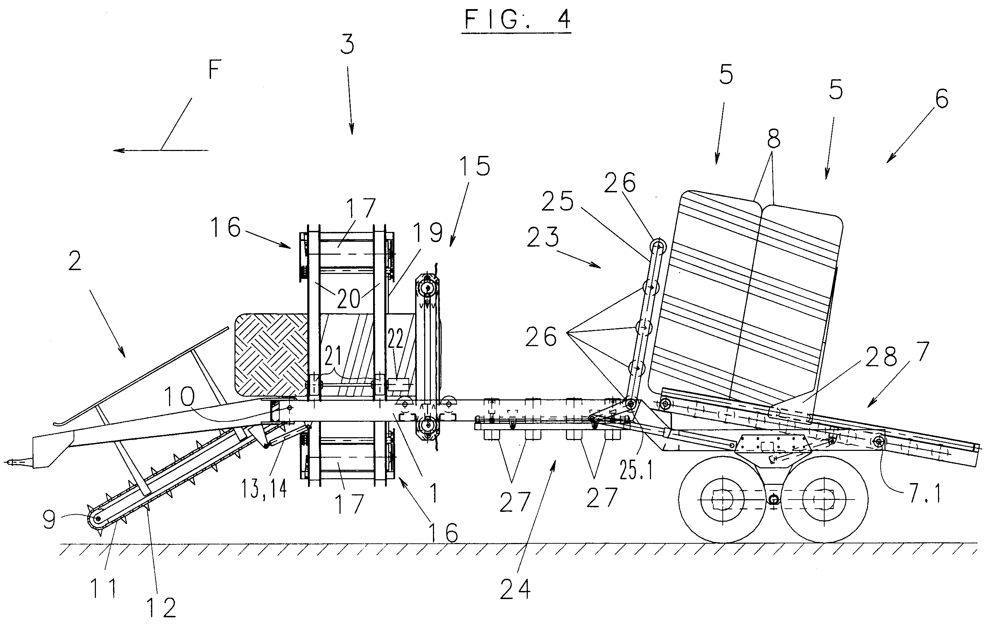

Damit aus den aus der Umhüllungsvorrichtung 3 austretenden, mit Folie umhüllten Erntegutballen 8 eine Ballengruppe 5, die aus zumindest zwei quer zur Fahrt- und Arbeitsrichtung F nebeneinander abgelegten Erntegutballen 8 besteht, gebildet werden kann, ist es nach der Erfindung vorgesehen, daß der Umhüllungsvorrichtung 3 eine Plattform 4 nachgeordnet ist, welche neben einer Verschiebung der Erntegutballen 8 in oder entgegen der Fahrt- und Arbeitsrichtung F auch eine Bewegung quer zur Fahrt- und Arbeitsrichtung F zuläßt (siehe Fig.3 und 4). In einer konstruktiv einfachen Ausführungsform besteht die Plattform 4 dabei aus einem schwenkbaren Abschnitt 23 und einem, dem Rahmen 1 zugeordneten Abschnitt 24, wobei der schwenkbare Abschnitt 23 einen Schwenkrahmen 25 und daran angebrachte, um quer zur Fahrt- und Arbeitsrichtung F drehbar gelagerte Rollen 26 aufweist, während der dem Rahmen 1 zugeordnete Abschnitt 24 um in Fahrt- und Arbeitsrichtung F gerichtete Achsen drehbar gelagerte Stützrollen 27 umfaßt. In einer Ausgangsstellung des Schwenkrahmens 25 (Fig. 3) befinden sich die Stützrollen 27 in den Zwischenräumen der Rollen 26 und können zur Einleitung einer Querverschiebung der Erntegutballen 8 soweit angehoben werden, daß die Erntegutballen 8 nur noch auf den Stützrollen 27 aufliegen, während die Rollen 26 vollständig entlastet sind. Dadurch wird die Bildung einer Ballengruppe 5, die dann beispielsweise aus zwei nebeneinander liegenden Erntegutballen 8 mit einer Breite von 1,20 m oder aus drei Erntegutballen 8 mit einer Breite von 0,80 m bestehen kann, ermöglicht, ohne daß dabei die die Erntegutballen 8 umgebende Umhüllung beschädigt wird. Der Antrieb von zumindest einem Teil der Rollen 26 bzw. der Stützrollen 27 kann vorzugsweise über hydraulische oder elektrische Antriebsmotoren erfolgen, wobei über geeignete Antriebsmittel ein Antrieb der Rollen 26 in einer Drehrichtung, bzw. der Antrieb der Stützrollen 27 in unterschiedlicher Drehrichtung möglich ist.

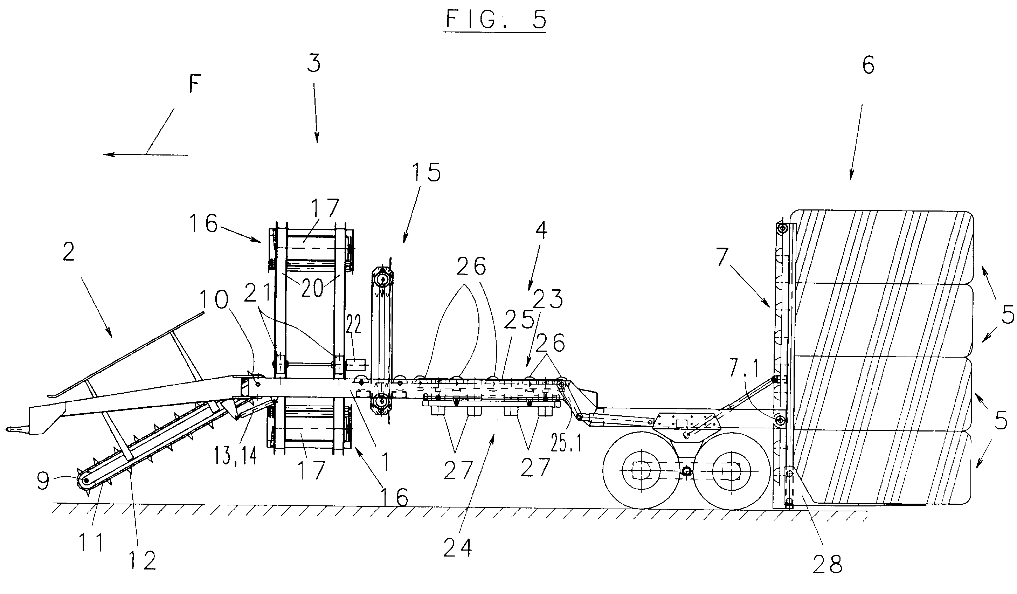

Nach der Fertigstellung einer Ballengruppe 5 kann diese durch eine Schwenkbewegung des Schwenkrahmens 25 um eine quer zur Fahrt- und Arbeitsrichtung F gerichtete Achse 25.1 auf einer Ladepritsche 7 zur Bildung eines Ballenstapels 6 abgesetzt werden. (Fig. 4) Damit die jeweiligen Ballengruppen 5 auf der Ladepritsche 7 sicher abgesetzt und transportiert werden können, weist die Ladepritsche 7 ein Verschiebegestell 28 auf, welches selbsttätig oder durch geeignete Antriebsmittel in oder entgegen der Fahrt- und Arbeitsrichtung F bewegbar ist. Dadurch wird es ermöglicht, aus mehreren Ballengruppen 5 einen Ballenstapel 6 zu bilden, der dann wie in Fig.5 dargestellt an einer zentralen Ablagestelle durch eine Schwenkbewegung der Ladepritsche 7 um eine quer zur Fahrt- und Arbeitsrichtung F gerichtete Achse 7.1 auf dem Erdboden abgesetzt werden kann.

Zur Steuerung der in den Figuren 1 bis 5 veranschaulichten Vorgänge sind nach einem weiteren Aspekt der Erfindung Erkennungsmittel vorgesehen, die beispielsweise als Tastelemente oder Meßräder ausgebildet sind. Die von den Erkennungsmitteln bereitgestellten Signale können dann einer zentralen Auswerte- und Steuerungseinheit zugeführt werden, so daß dadurch eine einfache Bedienung bzw. Handhabung erreichbar ist.

## Patentansprüche

1. Landwirtschaftliche Aufsammel-, Transport- und Absetzeinheit für Erntegutballen, insbesondere für quaderförmige Erntegutballen mit einem sich über Laufräder gegenüber dem Erdboden abstützenden Rahmen (1), einer an einem, bezüglich der Fahrt- und Arbeitsrichtung (F) vorderen Ende des Rahmens (1) angeordneten Aufnebmereinrichtung (2) für die Erntegutballen (8), sowie einer dahinter befindlichen, um eine quer zur Fahrt- und Arbeitsrichtung (F) gerichtete Achse (25.1) schwenkbaren Plattform (4) zur Bildung von einer, aus zumindest zwei Erntegutballen (8) bestehenden Ballengruppe (5) und zur Ablage der Ballengruppe (5) auf einer der Plattform (4) nachgeordneten, am hinteren Ende des Rahmens (1) angebrachten Ladepritsche (7), welche ein in und entgegen der Fahrt- und Arbeitsrichtung (F) bewegbar geführtes, als Anlage für die hinterste Ballengruppe (5) dienendes Verschiebegestell (28) aufweist und zum Absetzen eines aus mehreren Ballengruppen (5) bestehenden Ballenstapels (6) um eine quer zur Fahrt- und Arbeitsrichtung (F) gerichtete Achse (7.1) aus einer zumindest in etwa horizontalen in eine vertikale Stellung und zurück überführbar ist, **dadurch gekennzeichnet**, daß der Aufnehmereinrichtung (2) eine Umhüllungsvorrichtung (3) zum allseitigen und luftdichten Umhüllen der Erntegutballen (8) zu- oder nachgeordnet ist.

2. Landwirtschaftliche Aufsammel-, Transport- und Absetzeinheit für Erntegutballen nach Anspruch 1, **dadurch gekennzeichnet**, daß der Aufnehmereinrichtung (2) eine Umhüllungsvorrichtung (3) zum allseitigen und luftdichten Umhüllen der Erntegutballen (8) mit einer dehnbaren und selbsthaftenden Folie zu- oder nachgeordnet ist.

3. Landwirtschaftliche Aufsammel-, Transport- und Absetzeinheit für Erntegutballen nach Anspruch 1 und 2, **dadurch gekennzeichnet**, daß die der Aufnehmereinrichtung (2) zu- oder nachgeordnete Umhüllungsvorrichtung (3) so ausgebildet ist, daß die zu umhüllenden Erntegutballen (8) durch die Umhüllungsvorrichtung (3) hindurch geführt werden.

4. Landwirtschaftliche Aufsammel-, Transport- und Absetzeinheit für Erntegutballen nach einem der Ansprüche 1 bis 3, **dadurch gekennzeichnet**, daß die der Aufnehmereinrichtung (2) zu- oder nachgeordnete Umhüllungsvorrichtung (3) so ausgeführt ist, daß die zu umhüllenden Erntegutballen (8) mit ihrer in Fahrt- und Arbeitsrichtung (F) ausgerichteten, größten Ausdehnung durch die Umhüllungsvorrichtung (3) hindurch geführt werden.

5. Landwirtschaftliche Aufsammel-, Transport- und Absetzeinheit für Erntegutballen nach einem der Ansprüche 1 bis 4, **dadurch gekennzeichnet**, daß die Erntegutballen (8) unmittelbar aneinander anliegend durch die Umhüllungsvorrichtung (3) hindurch bewegt werden.

6. Landwirtschaftliche Aufsammel-, Transport- und Absetzeinheit für Erntegutballen nach einem der Ansprüche 1 bis 4, **dadurch gekennzeichnet**, daß die Erntegutballen (8) beim Durchlauf durch die Umhüllungsvorrichtung (3) einen Abstand (A) zueinander aufweisen.

7. Landwirtschaftliche Aufsammel-, Transport- und Absetzeinheit für Erntegutballen nach einem der Ansprüche 1 bis 6, **dadurch gekennzeichnet**, daß beim Durchlauf der Erntegutballen (8) durch die Umhüllungsvorrichtung (3) auf der Oberfläche der Erntegutballen (8) eine fortlaufende, spiralförmige Umhüllung aufbringbar ist.

8. Landwirtschaftliche Aufsammel-, Transport- und Absetzeinheit für Erntegutballen nach einem der Ansprüche 1 bis 7, **dadurch gekennzeichnet**, daß die Umhüllungsvorrichtung (3) eine Schweiß- und Trennvorrichtung (15) zur Verschweißung und zur anschließenden Trennung der fortlaufenden, spiralförmigen Umhüllung zweier im Abstand (A) aufeinander folgender Erntegutballen (8) umfaßt.

9. Landwirtschaftliche Aufsammel-, Transport- und Absetzeinheit für Erntegutballen nach einem der Ansprüche 1 bis 7, **dadurch gekennzeichnet**, daß über die der Umhüllungsvorrichtung (3) zugeordneten Schweiß- und Trennvorrichtung (15) eine Trennung der fortlaufenden, spiralförmigen Umhüllung zweier im Abstand (A) aufeinander folgender Erntegutballen (8) erreichbar ist, ohne daß eine Verschweißung der Umhüllung erfolgt.

10. Landwirtschaftliche Aufsammel-, Transport- und Absetzeinheit für Erntegutballen nach einem der Ansprüche 1 bis 9, **dadurch gekennzeichnet**, daß zur Bildung einer Ballengruppe (5), die aus quer zur Fahrt- und Arbeitsrichtung (F) nebeneinander abgelegten, umhüllten Erntegutballen () besteht, die Umhüllungsvorrichtung (3) quer zur Fahrt- und Arbeitsrichtung (F) verschiebbar am Rahmen (1) angebracht ist.

11. Landwirtschaftliche Aufsammel-, Transport- und Absetzeinheit für Erntegutballen nach einem der Ansprüche 1 bis 9, **dadurch gekennzeichnet**, daß zur Bildung einer Ballengruppe (5) aus quer zur Fahrt- und Arbeitsrichtung (F) nebeneinander abgelegten, umhüllten Erntegutballen (8) die aus der Umhüllungsvorrichtung (3) austretenden Erntegutballen (8) einer eine Querverschiebung zulassenden Plattform (4) zugeführt werden.

12. Landwirtschaftliche Aufsammel-, Transport- und Absetzeinheit für Erntegutballen nach Anspruch 11, **dadurch gekennzeichnet**, daß die Plattform (4) vorzugsweise von quer zur Fahrt- und Arbeitsrichtung (F) angebrachten, drehbar gelagerten Rollen (26) und zwischen diesen angeordneten, um in Fahrt- und Arbeitsrichtung (F) gerichtete Achsen drehbar gelagerten Stützrollen (27) gebildet ist.

13. Landwirtschaftliche Aufsammel-, Transport- und Absetzeinheit für Erntegutballen nach Anspruch 11 und 12, **dadurch gekennzeichnet**, daß die Stützrollen (27) zur Einleitung einer Querverschiebung der Erntegutballen (8) aus einer Außerbetriebstellung in eine Betriebsstellung in ihrer Lage veränderbar sind.

14. Landwirtschaftliche Aufsammel-, Transport- und Absetzeinheit für Erntegutballen nach einem der Ansprüche 11 bis 13, **dadurch gekennzeichnet**, daß zumindest ein Teil der Rollen (26) und der Stützrollen (27) der Plattform (4) antreibbar ist.

15. Landwirtschaftliche Aufsammel-, Transport- und Absetzeinheit für Erntegutballen nach einem der Ansprüche 1 bis 14, **dadurch gekennzeichnet**, daß die Umhüllungsvorrichtung (3) zumindest eine Vorstreckeinrichtung (16) mit einer Vorratsrolle (17) umfaßt, welche um eine in Fahrt- und Arbeitsrichtung (F) gerichtete Achse (18) rotierend um den zu umhüllenden Erntegutballen (8) bewegbar ist.

16. Landwirtschaftliche Aufsammel-, Transport- und Absetzeinheit für Erntegutballen nach einem der Ansprüche 1 bis 15, **dadurch gekennzeichnet**, daß die Umhüllungsvorrichtung (3) vorzugsweise von zwei Vorstreckeinrichtungen (16) mit jeweils einer Vorratsrolle (17) gebildet ist.

17. Landwirtschaftliche Aufsammel-, Transport- und Absetzeinheit für Erntegutballen nach einem der Ansprüche 1 bis 16, **dadurch gekennzeichnet**, daß zur Erfassung des Abstandes (A) zwischen zwei aufeinander folgenden Erntegutballen (8) bzw. zur Ermittelung des Durchlaufweges des jeweiligen Erntegutballens (8) durch die Umhüllungsvorrichtung (3) Erkennungsmittel vorgesehen sind.

18. Landwirtschaftliche Aufsammel-, Transport- und Absetzeinheit für Erntegutballen nach Anspruch 17, **dadurch gekennzeichnet**, daß die Erkennungsmittel vorzugsweise als elektrische Tastelemente oder Meßräder ausgeführt sind.

19. Landwirtschaftliche Aufsammel-, Transport- und Absetzeinheit für Erntegutballen nach Anspruch 17 und 18, **dadurch gekennzeichnet**, daß die von den Erkennungsmitteln bereitgestellten Signale einer zentralen Auswerte- und Steuerungseinheit zugeführt werden.
